# EUROPÄISCHE PATENTSCHRIFT

(11) **EP 0 522 442 B1**
(45) Veröffentlichungstag und Bekanntmachung des Hinweises auf die Patenterteilung: **22.02.1995**
(21) Anmeldenummer: 92111184.5
(22) Anmeldetag: 02.07.1992
(51) Int. Cl.: B60R 1/06

(54) **Aussenspiegel für ein Nutzfahrzeug, insbesondere Omnibus**
Exterior rear view mirror for a utility vehicle, in particular a bus
Miroir rétroviseur extérieur pour un véhicule utilitaire, notamment pour autobus

(30) Priorität: 10.07.1991 DE 9108483 U
(43) Veröffentlichungstag der Anmeldung: 13.01.1993
(73) Patentinhaber: HOHE KG, D-97903 Collenberg (DE)
(72) Erfinder: Polzer, Herwig, W-8760 Miltenberg (DE); Stütz, Gerhard, W-8760 Miltenberg (DE)
(74) Vertreter: Zinngrebe, Horst, Dr.rer.nat.

(56) Entgegenhaltungen:
- EP-A- 0 449 056
- GB-A- 1 127 074
- GB-A- 2 229 981

## Beschreibung

Die Erfindung betrifft einen Außenspiegel für ein Nutzfahrzeug, inbesondere Omnibus, mit einem an dem Fahrzeug befestigbaren Spiegelfuß, wobei zwischen Spiegelfuß und einem ein Spiegelgehäuse mit Spiegelglas tragenden Arm ein Gelenk mit im wesentlichen vertikaler Schwenkachse befestigt ist, wobei das Gelenk ein erstes am Spiegelfuß ausgebildetes Lagerteil mit kegelstumpfförmiger Lagerfläche sowie ein zweites, an dem Arm befestigtes Lagerteil mit kegelstumpfförmiger Gegenlagerfläche aufweist.

Der aus der DE-C-3 538 159 bekannte Außenspiegel besitzt ein an einem U-förmig gebogenen Arm befestigtes Spiegelgehäuse mit Spiegelglas, welcher über ein Wälzlager in einer Ausnehmung eines am Fahrzeug befestigten Spiegelfußes drehbar gehalten ist. Zwischen der Abtriebswelle eines zum Verschwenken des Spiegelgehäuses relativ zum Fahrzeug dienenden, spiegelfußfesten Schwenkmotors und dem Spiegelarm befindet sich eine Rutschkupplung, bei welcher eine konusförmige Anformung des Armes in einer entsprechend konusförmigen Vertiefung eines Kupplungsteils unter Zwischenlage eines Reibbelags sitzt. Diese Form der gelenkigen Halterung des Armes im Spiegelfuß ist mit dem Nachteil einer Korrosionsanfälligkeit behaftet, da das Wälzlager nur durch eine Abdeckscheibe gegen Witterungseinflüsse geschützt ist. Das Wälzlager sichert eine leichtgängige Verschwenkbarkeit des Armes relativ zum Spiegelfuß und kann große Querkräfte aufnehmen, die beispielsweise dann auftreten können, wenn an dem Arm mehrere Spiegelgehäuse befestigt werden (DE-A-3 740 485). Das Wälzlager ist jedoch sehr aufwendig und bedarf besonderen Schutzes vor Witterungseinflüssen.

Aus dem Dokument GB-A-1 127 074 ist gemäß dem Oberbegriff des Anspruchs 1 ein Außenspiegel für einen Omnibus bekannt, bei dem der das Spiegelgehäuse tragende Arm am Spiegelfuß mittels zweier längs der Schwenkachse beabstandeter Lager mit konischen Lagerteilen gehalten ist, wobei die Lagerteile am Arm durch eine zwischengelegte Druckfeder in die jeweiligen Lagerpfannen am Spiegelfuß gedrückt werden. Diese Bauweise ist sehr aufwendig und bereitet Schwierigkeiten bei der Montage.

Der Erfindung liegt demgegenüber die Aufgabe zugrunde, einen einarmigen Außenspiegel der eingangs genannten Art zu schaffen, an welchem mehrere Spiegelgläser ohne Beeinträchtigung seiner Schwenkbarkeit befestigt werden können.

Bei dem eingangs genannten Außenspiegel sieht die Erfindung dazu vor, daß das zweite Lagerteil an einem Arm ausgebildet ist und daß beide Lagerteile durch einen die Schwenkachse bildenden federbelasteten Bolzen zusammengehalten sind und eine Durchgangsbohrung für den Bolzen aufweisen.

Der erfindungsgemäße Außenspiegel wird hinsichtlich seines Gelenks wartungsfrei, wenn in zweckmäßiger Ausgestaltung der Erfindung zwischen die Lagerfläche und die Gegenlagerfläche eine Folie beispielsweise aus Kunststoff zwischengelegt ist, die axial geschlitzt sein kann.

Eine zweckmäßige Ausführungsform der Erfindung sieht vor, daß die Lagerfläche die Gegenlagerfläche umgreift. Bevorzugt erweitern sich die Lagerfläche und die Gegenlagerfläche nach unten radial außen. Ferner empfiehlt es sich, das erste und/oder das zweite Lagerteil topfförmig auszubilden, wobei sich der Bolzen durch die Basis der Lagerteile erstreckt.

Zur besseren Führung des Armes beim Abschwenken empfiehlt es sich, das zweite Lagerteil mit einer sich axial erstreckenden und am Bolzen anliegenden Stützfläche zu versehen. Zweckmäßig ist zwischen einem radial verbreiteten Ende des Bolzens und der Basis beziehungsweise dem freien Ende der Stützfläche eine Spiralfeder eingespannt. Vor allem dann, wenn an dem Arm mehrere Spiegel befestigt werden sollen, kann es sich empfehlen, das zweite Lagerteil mit einem sich radial erstreckenden Schenkel zu versehen, der von dem Bolzen durchdrungen ist, wobei in die Öffnung des Schenkels, durch die sich der Bolzen erstreckt, vorteilhafterweise eine Dämpfungsbuchse aus Kunststoff eingesetzt ist. Damit ergibt sich zugleich eine Sicherung des Spiegelarmes gegen Abfallen vom Fuß für den Fall, daß eines der Lagerteile brechen sollte.

In weiterer bevorzugter Ausgestaltung der Erfindung kann an dem zweiten Lagerteil eine beispielsweise aus zwei beabstandeten Rohren bestehende Rohrkonstruktion befestigt sein, welche relativ zur Schwenkachse nach unten unter einem ersten Winkel und bevorzugt anschließend nach unten unter einem weiteren Winkel verläuft. An der Rohrkonstruktion kann zweckmäßig ein einteiliges Spiegelgehäuse gehalten sein, an dessen offenem, spiegelfußseitigen Ende die Manschette verankert ist. An jedem der sich unter einem der genannten Winkel zur Schwenkachse erstreckenden Abschnitte der Rohrkonstruktion kann je ein Spiegelglas manuell oder elektrisch verstellbar befestigt sein, etwa in der Weise, daß ein die elektrischen Verstellmotore etwa gemäß DE-A-2 715 575 beherbergender Becher über ein Zwischenglied auf den beiden parallelen Rohrsträngen befestigt ist. Der zwischen den Spiegelgläsern und dem Spiegelgehäuse verbleibende Raum kann mittels eines eingeklemmten Formteils abgedeckt werden, so daß das Innere des Spiegelgehäuses gegen Witterungseinflüsse geschützt ist.

Die Erfindung wird nachstehend anhand des in der beigefügten Zeichnung im einzelnen dargestellten Ausführungsbeispiels beschrieben. Es zeigen:
- Figur 1:: einen Vertikalschnitt durch einen Außenspiegel für einen Omnibus;

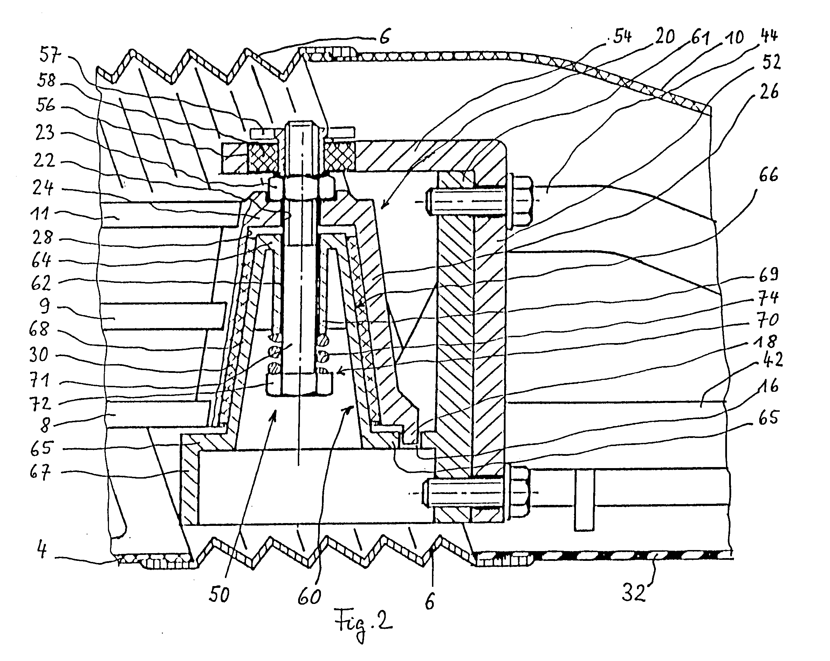

- Figur 2:: eine vergrößerte Darstellung eines Ausschnitts aus Figur 1;
- Figur 3:: eine Draufsicht auf einen vergrößerten Ausschnitt aus Fig. 1;
- Figur 4:: einen Querschnitt durch einen Teil des Spiegelfußes zum Außenspiegel nach Figur 1.
- Figur 5:: eine vergrößerte Darstellung eines Querschnitts durch das Spiegelgehäuse längs der Linie III-III aus Figur 1; und
- Figur 6:: eine Draufsicht auf eine vergrößerte Einzelheit aus Figur 5.

Der Außenspiegel 1 weist einen Spiegelfuß 2 auf, der von einem Spiegelfußgehäuse 4 eingefaßt ist. An dem fahrzeugferne Ende des Spiegelfußgehäuses 4 ist ein Faltenbalg 6 aus elastischem Material befestigt, dessen dem Spiegelfußgehäuse 4 gegenüberliegendes Ende an einem Spiegelgehäuse 10 festliegt. Der Querschnitt des Spiegelgehäuses 10 an seinem spiegelfußnahen Ende ist im wesentlichen gleich groß und gleichgestaltet wie der entsprechende Querschnitt des Spiegelfußgehäuses 4 an dessen fahrzeugfernen Ende. Dadurch erhält der Außenspiegel 1 zusammenhängende, schlanke Form, die insbesondere am Übergang zwischen Spiegelfuß 2 und Spiegelgehäuse 10 durch den Faltenbalg 6 kaum beeinträchtigt wird.

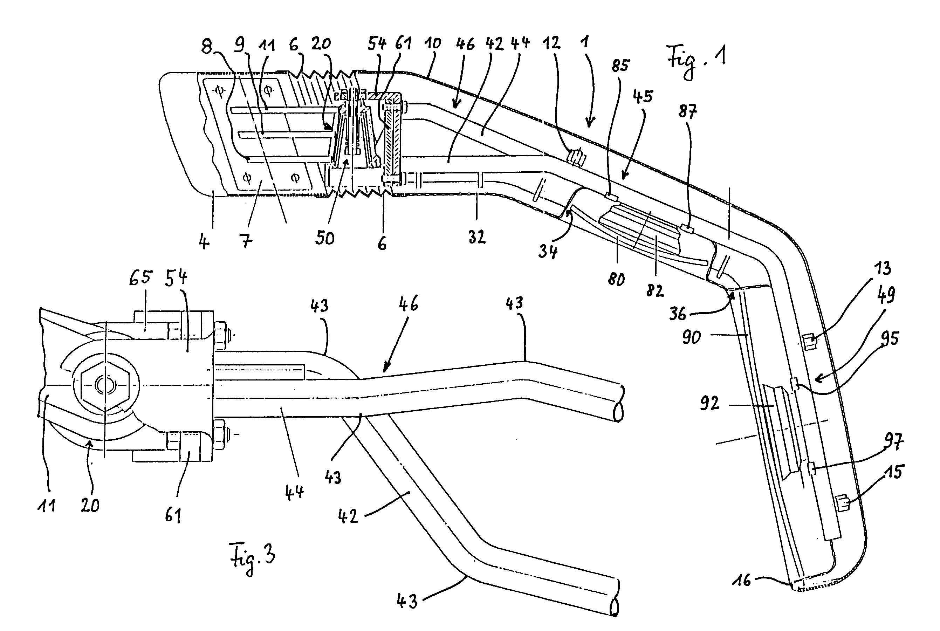

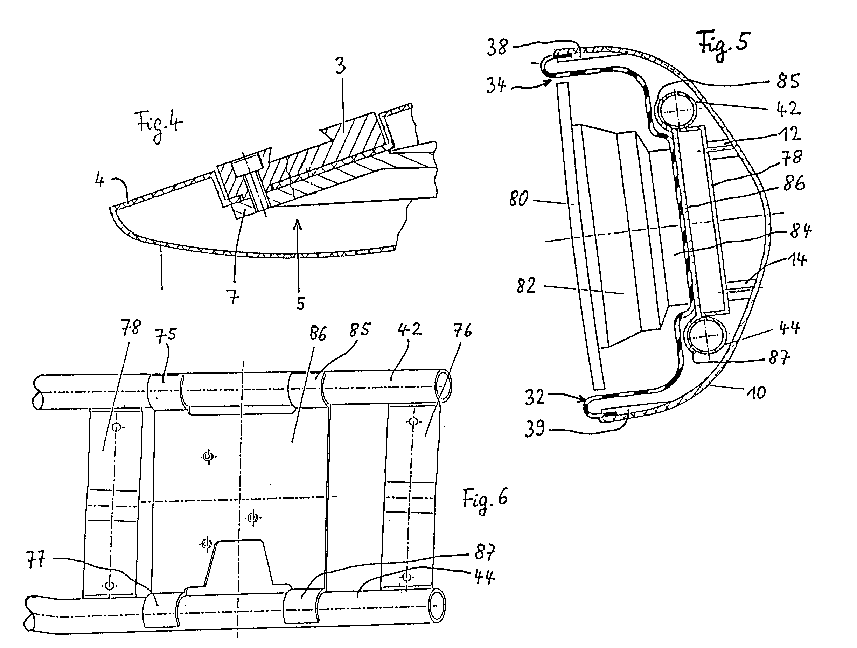

Der Spiegelfuß 2 besteht gemäß Figuren 1 und 4 zunächst aus einer Montageplatte 3, welche mittels einer schwalbenschwanzartigen Ausnehmung an einem am Fahrzeug vorgesehenen Gegenstück befestigt werden kann. Auf die Montageplatte 3 ist auf ihrer dem Schwalbenschwanz gegenüberliegenden Seite ein massiver Träger 5 aufgeschraubt, der hier eine der Montageplatte zugewandte Gegenplatte 7 aufweist. Zwischen die Montageplatte 3 und die Gegenplatte 7 sind die Enden des Spiegelfußgehäuses 4 eingeklemmt.An die Montageplatte 3 sind drei übereinanderliegende massive Streben 8, 9, 11 angeformt. Die Streben 8, 9, 11 tragen an ihrem freien Ende ein erstes Lagerteil 20, welches die Form eines umgekehrten Bechers hat.

Das erste, spiegelfußseitige Lagerteil 20 ist Teil eines Gelenks 50 zwischen dem Spiegelfuß 2 und einem das Spiegelgehäuse 10 tragenden Arm 40. Das erste Lagerteil 20 besitzt die Form eines sich nach unten radial auswärts öffnenden Bechers mit einer inneren kegelstumpfförmigen Lagerfläche 28, die die Innenfläche der Becherwand 26 ist. Der Becher besitzt eine Basis 24, welche eine mittige Durchgangsbohrung 22 aufweist. An der nach oben weisenden Außenseite besitzt die Basis 24 eine Einsenkung um die Bohrung 22 herum zur Aufnahme beispielsweise einer Sechskantmutter 23, die in der Einsenkung unverdrehbar gehalten ist.

An dem spiegelnahen Ende des Armes 40 ist eine zur Schwenkachse 15 des Gelenks 50 parallele Platte 61 befestigt, aus deren auf den Spiegelfuß 2 zuweisenden Seite eine sich zum Spiegelfuß 2 erstreckende Bodenplatte 65 vorsteht. Die Bodenplatte 65 ist an ihrem freien Rand mit einer umlaufenden Schürze 67 versehen. Aus der Bodenplatte 65 erhebt sich ein zweites Lagerteil 60 von kegelstumpfförmiger Gestalt. Das im wesentlichen hohle zweite Lagerteil 60 besitzt einen kegelstumpfförmigen Mantel 66, auf dessen Außenfläche eine Gegenlagerfläche 68 ausgebildet ist. Die kegelstumpfförmige Gegenlagerfläche 68 hat die gleiche Steigung wie die Lagerfläche 28, ist jedoch bezüglich der Schwenkachse 15 radial einwärts versetzt, so daß zwischen der Lagerfläche 28 und der Gegenlagerfläche 68 über deren gesamten Umfang ein radialer Zwischenraum verbleibt. In diesen Zwischenraum ist eine zusammenhängende, achsial geschlitzte Kunststoffolie 30 eingefügt, die im zusammengebauten Zustand des Gelenks 50 mit ihrer Außenfläche an der Lagerfläche 28 und mit ihrer Innenfläche an der Gegenlagerfläche 68 anliegt. Der Mantel 66 besitzt eine Basis 64 mit einer in das Innere des zweiten Lagerteils 60 sich erstreckenden Ausstülpung 69. Die Ausstülpung 69 besitzt eine Durchgangsbohrung 62 gleicher lichter Weite wie die Durchgangsbohrung 22, so daß ein Bolzen 70 vom Inneren des zweiten Lagerteils 60 her durch die Durchgangsbohrungen 62 und 22 hindurchgeschoben und mit einem Gewindeabschnitt in die Mutter 23 eingeschraubt werden kann. Die Innenfläche der Durchgangsbohrung 62 liegt dann als Stützfläche an einem glatten Abschnitt des Bolzens 70 an. Zwischen dem verbreiterten Kopf 72 des Bolzens 70 und dem freien Ende der Ausstülpung 69 ist eine Druckspiralfeder 74 eingespannt. Der mit der Mutter 23 verschraubte Bolzen 70 hält damit die beiden Lagerteile 20 und 60 in axialer Richtung zusammen, welche durch den von der Feder 74 entwickelten Druck aufeinandergepreßt werden, wobei die Achse des Bolzens 70 die Schwenkachse 15 des Gelenks definiert.

An der vom Spiegelfuß 2 abgewandten Seite der Platte 61 ist ein Winkel 52 angeschraubt, dessen freier, auf den Spiegelfuß 2 zuweisender Schenkel 54 sich über die Mutter 23 erstreckt. Der Schenkel 54 weist eine vom Bolzen 70 durchsetzte Durchgangsbohrung 56 von wesentlich größerem Durchmesser als der Außendurchmesser des Bolzenschaftes auf, in welche ein ringförmiges Dämpfungselement 58 eingesetzt ist. Eine Flügelmutter 57 ist auf das Gewindeende des Bolzens 70 aufgeschraubt und erstreckt sich durch das Zentrum des Ringes 58 und stellt eine Gegenmutter zur Mutter 23 dar, so daß durch das Mutternpaar 23, 57 der Bolzen 70 gesichert ist. Der Winkel 52, 54 in Verbindung mit der Mutter 57 stellt eine Sicherung insofern dar, als selbst bei Bruch des Lagerteils 60 der Spiegelarm 40 am Spiegelfuß 2 wenigstens vorübergehend gesichert bleibt.

Aus dem freien unteren Rand des ersten Lagerteils 20 steht axial ein Zapfen 18 nach unten vor, welcher in eine in der Bodenplatte 65 ausgebildete, zur Schwenkachse 15 konzentrische Ringnut 16 eintaucht. Die umfangsmäßige Länge der Nut 16 bestimmt den Schwenkbereich des Armes 40 relativ zum Spiegelfuß 2. Bei Anlage des Zapfens 18 an einem Ende der Nut 16 befindet sich der Arm 40 in Gebrauchslager, bei Anlage des Zapfens 18 am anderen Ende der Ringnut 16 befindet sich der Arm 40 in einer an das Fahrzeug abgeklappten Endstellung. Es können nicht dargestellte Mittel vorgesehen sein, die den Arm elastisch in Gebrauchslage wie auch in Klappendlage halten.

Der Arm 40 besteht aus einem Doppelrohr mit den beiden Rohrsträngen 42, 44, deren spiegelfußnahe Enden in der erwähnten Platte 61 befestigt sind. Der in Ansicht der Figur 1 hintere Rohrstrang 44 erstreckt sich am gelenknahen Ende zum oberen und vorderen Teil der Platte 61, während der vordere Rohrstrang 42 am gelenknahen Ende auf den unteren und hinteren Teil der Platte 61 in einer zur Schwenkachse 15 senkrechten Richtung zuläuft. Damit bildet das Doppelrohr längs seines gelenknahen ersten Abschnittes 46 eine Art verwundene Gabel mit mehreren Biegezonen 43, die zur Steifheit des weit auskragenden Armes 40 beiträgt. Längs des anschließenden, von der Schwenkachse 15 wegweisenden zweiten Abschnittes 45 des Armes 40 liegen beide Rohrstränge 42, 44 in der in Figur 1 dargestellten Frontalansicht in Fahrtrichtung hintereinander. Der Armabschnitt 45 erstreckt sich unter einem Winkel von etwa 65° nach unten zur Schwenkachse 15 und trägt ein erstes Spiegelglas 80. Der Armabschnitt 45 geht über eine weitere Abbiegung 47 in einen dritten Armabschnitt 49 über, der mit der Schwenkachse 15 einen Winkel von etwa 15° nach unten einschließt und längs dessen die Rohrstränge 42, 44 ebenfalls in Fahrtrichtung hintereinander liegen (Figur 1). An dem dritten Armabschnitt 49 ist ein weiteres Spiegelglas 90 befestigt, das konvexe Form besitzt und eine wesentlich größere Fläche aufweist als das Spiegelglas 80.

Das Spiegelglas 80 sitzt lösbar, wie etwa in der deutschen Auslegeschrift 29 07 433 beschrieben, auf einem nichtdargestellten Verstellgetriebe, welches in einem Becher 82 (DE-A-2 715 575) beherbergt ist (Figur 5). Das Bodenteil 84 des Bechers 82 ist auf einer Brücke 86 (Figur 6) in nicht dargestellter Weise dauerhaft befestigt, von deren gegenüberliegenden Seiten je ein Paar Lappen 75, 85, bzw. 77, 87 den Rohrstrang 42 beziehungsweise 44 übergreifen und mit diesen verbunden ist. Entsprechend ist das Spiegelglas 90 auf einem Becher 92 lösbar befestigt, welcher auf einem der Brücke 86 entsprechenden, jedoch nicht dargestellten Brückenteil sitzt. Dieses Brückenteil ist wieder mit Lappenpaaren 95, 97 an den Rohrsträngen 42, 44 verankert. Beiderseits der Brücke 86 (und entsprechend des Brückenteils) sind die Rohrstränge 42, 44 durch je einen Steg 76, 78 verbunden. Das Spiegelgehäuse 10 ist an den Stegen 76, 78 verschraubt oder vernietet, wozu aus der Innenwand des Spiegelgehäuses 10 mehrere Pfosten 12, 14, sowie 13, 15 zu den jeweiligen Stegen hin vorstehen und mit Innengewinde versehen sein können. Die Außenkontur des Spiegelgehäuses 10 in der Ansicht nach Figur 1 folgt dem Verlauf des Rohrstrangs 44 und umfaßt das freie Ende beider Rohrstränge 42, 44 am dritten Armabschnitt 49. Die auf das Fahrzeug zuweisende Seite des Spiegelgehäuses 10, an welcher die Spiegelgläser 80, 90 vom Fahrer einsehbar sind, ist offen. Die von den Spiegelgläsern 80 und 90 nicht abgedeckten Bereiche dieser Öffnung sind von einem langestreckten Profilteil 32 abgedeckt, welches in mehreren, über den Längsrand des Spiegelgehäuses 10 verteilten Taschen 38, 39 verankert ist und im Bereich des ersten Spiegelglases 80 eine Einbuchtung 34 sowie im Bereich des Spiegelglases 90 eine weitere Einbuchtung 36 aufweist. Innerhalb jeder Einbuchtung 34, 36 ist das Formteil 32 unter dem Becher 82, 92 hergeführt und erstreckt sich zwischen dem Boden 84 des Bechers und der Brücke 86, wie Figur 5 zeigt. Auf diese Weise ist der vom Spiegelgehäuse 10 und von dem Formteil 32 umschlossene Raum nach außen vollständig geschlossen. Lediglich die Spiegelgläser 80, 90 mit zugehörigen Bechern 82, 92 liegen nach außen frei, sind jedoch in den zugehörigen Einbuchtungen 34, 36 beherbergt.

Zur elektrischen Verstellung der Spiegelgläser 80 und 90 vom Inneren des Fahrzeugs aus sind nicht dargestellte elektrische Leitungen in dem genannten, vom Spiegelgehäuse 10 und im Formteil 32 umschlossenen Inneren verlegt, innerhalb der Manschette 6 um das Gelenk 50 herum geführt und durch nicht dargestellte Öffnungen in den Platten 3 und 7 in das Fahrzeuginnere weitergeleitet.

## Patentansprüche

1. Außenspiegel für ein Nutzfahrzeug, insbesondere Omnibus, mit einem an dem Fahrzeug befestigbaren Spiegelfuß (2), wobei zwischen Spiegelfuß (2) und einem ein Spiegelgehäuse (10) mit Spiegelglas (80, 90) tragenden Arm (40) ein Gelenk (50) mit im wesentlichen vertikaler Schwenkachse (15) befestigt ist, wobei das Gelenk (50) ein erstes am Spiegelfuß ausgebildetes Lagerteil (20) mit kegelstumpfförmiger Lagerfläche (28) sowie ein zweites Lagerteil (60) mit kegelstumpfförmiger Gegenlagerfläche (68) aufweist, dadurch gekennzeichnet, daß das zweite Lagerteil (60) am Arm (40) ausgebildet ist und daß beide Lagerteile (20, 60) durch einen die Schwenkachse (15) bildenden federbelasteten Bolzen (70) zusammengehalten sind und eine Durchgangsbohrung (22, 62) für den Bolzen (70) aufweisen.

2. Außenspiegel nach Anspruch 1, dadurch gekennzeichnet, daß das Gelenk von einer elastischen Manschette (6) umgeben ist.

3. Außenspiegel nach Anspruch 1 oder 2, dadurch gekennzeichnet, daß zwischen die Lagerfläche (28) und die Gegenlagerfläche (68) eine bevorzugt axial geschlitzte Folie (69) zwischengelegt ist.

4. Außenspiegel nach einem der vorstehenden Ansprüche, dadurch gekennzeichnet, daß die Lagerfläche (28) die Gegenlagerfläche (68) umgreift.

5. Außenspiegel nach einem der vorstehenden Ansprüche, dadurch gekennzeichnet, daß die Lagerfläche (28) und die Gegenlagerfläche (68) sich nach unten radial außen erweitern.

6. Außenspiegel nach einem der vorstehenden Ansprüche, dadurch gekennzeichnet, daß das erste und/oder das zweite Lagerteil (20, 60) topfförmig ausgebildet ist/sind, wobei der Bolzen (70) sich durch die Basis (24, 64) der Lagerteile (20, 60) erstreckt.

7. Außenspiegel nach Anspruch 6, dadurch gekennzeichnet, daß das zweite Lagerteil (60) eine sich axial erstreckende und am Bolzen (70) anliegende Stützfläche (62) aufweist.

8. Außenspiegel nach Anspruch 6 oder 7, dadurch gekennzeichnet, daß zwischen einem radial verbreiterten Ende (72) des Bolzens (70) und der Basis (64) bzw. dem freien Ende der Stützfläche (62) eine Spiralfeder (74) eingespannt ist.

9. Außenspiegel nach einem der vorstehenden Ansprüche, dadurch gekennzeichnet, daß das zweite Lagerteil (60) einen sich radial erstreckenden Schenkel (54) aufweist, der von dem Bolzen (70) durchdrungen ist.

10. Außenspiegel nach Anspruch 9, dadurch gekennzeichnet, daß in die Öffnung des Schenkels (54), durch die sich der Bolzen (70) erstreckt, eine Dämpfungsbuchse (56) eingesetzt ist.

11. Außenspiegel nach einem der vorstehenden Ansprüche, dadurch gekennzeichnet, daß an dem zweiten Lagerteil (60) eine aus zwei beabstandeten Rohrsträngen (42, 44) bestehende Rohrkonstruktion (40) befestigt ist, an der das Spiegelgehäuse (10) befestigt ist.

12. Außenspiegel nach Anspruch 11, dadurch gekennzeichnet, daß ein erster Abschnitt (45) unter einem ersten Winkel zur Schwenkachse (15) geneigt ist und ein erstes Spiegelglas (80) trägt, und daß ein zweiter Armabschnitt (49) unter einem zweiten Winkel zur Schwenkachse (15) geneigt ist und ein zweites Spiegelglas (90) trägt.

13. Außenspiegel nach einem der vorstehenden Ansprüche, dadurch gekennzeichnet, daß die Manschette (6) an dem spiegelfußseitigen freien Ende des Spiegelgehäuses (10, 32) sowie an einem Spiegelfußgehäuse (4) befestigt ist.

14. Außenspiegel nach einem der Ansprüche 11 bis 13, dadurch gekennzeichnet, daß jedes Spiegelglas (80, 90) Über Verstellmotoren beherbergende Becher (82, 92) an den Rohrsträngen (42, 44) befestigt ist.

15. Außenspiegel nach einem der vorstehenden Ansprüche, dadurch gekennzeichnet, daß eine im Bereich der Spiegelgläser (80, 90) vorgesehener Ausschnitt des Spiegelgehäuses (10) von einem Formteil (32) abgedeckt ist, so daß das Spiegelgehäuse (10) mit Formteil (32) einen gegen Witterungseinflüsse geschlossenen Raum bilden.

## Claims

1. An exterior mirror for a commercial vehicle, particularly a bus, with a mirror foot (2) securable on the vehicle, wherein an articulation (50) with a substantially vertical pivoting axis (15) is secured between the mirror foot (2) and an arm (40) supporting a mirror casing (10) and mirror glass (80, 90), the said articulation (50) having a first bearing part (20) formed on the mirror foot with a truncated conical bearing surface (28), and a second bearing part (60) with an opposed truncated conical bearing surface (68), **characterised in that** the second bearing part (60) is formed on the arm (40) and both bearing parts (20, 60) are held together by a spring-loaded pin (70) forming the pivoting axis (15), and have a through bore (22, 62) for the pin (70).

2. An exterior mirror in accordance with claim 1, **characterised in that** the articulation is surrounded by a resilient sleeve (6).

3. An exterior mirror in accordance with claim 1 or 2, **characterised in that** a film (30), preferably slit axially, is interposed between the bearing surface (28) and the opposite bearing surface (68).

4. An exterior mirror in accordance with one of the preceding claims, **characterised in that** the bearing surface (28) engages around the opposed bearing surface (68).

5. An exterior mirror in accordance with one of the preceding claims, **characterised in that** the bearing surface (28) and the opposed bearing surface (68) broaden radially outwards towards the bottom.

6. An exterior mirror in accordance with one of the preceding claims, **characterised in that** the first and/or the second bearing part (20, 60) is/are pot-shaped, the pin (70) extending through the bases (24, 64) of the bearing parts (20, 60).

7. An exterior mirror in accordance with claim 6, **characterised in that** the second bearing part (60) has a supporting surface (62) extending axially and positioned against the pin (70).

8. An exterior mirror in accordance with claim 6 or 7, **characterised in that** a helical spring (74) is clamped between a radially broadened end (72) of the pin (70), and the base (64) and/or the free end of the supporting surface (62).

9. An exterior mirror in accordance with one of the preceding claims, **characterised in that** the second bearing part (60) has a radially extending limb (54), through which the pin (70) passes.

10. An exterior mirror in accordance with claim 9, **characterised in that** a damping sleeve (58) is inserted into the opening in the limb (54) through which the pin (70) extends.

11. An exterior mirror in accordance with one of the preceding claims, **characterised in that** a pipe structure (40), comprising two lines of piping (42, 44) at a distance from one another, is secured on the second bearing part (60), and the mirror casing (10) is secured on the said pipe structure (40).

12. An exterior mirror in accordance with claim 11, **characterised in that** a first portion (45) is inclined at a first angle to the pivoting axis (15) and supports a first mirror glass (80), and a second arm portion (49) is inclined at a second angle to the pivoting axis (15) and supports a second mirror glass (90).

13. An exterior mirror in accordance with one of the preceding claims, **characterised in that** the sleeve (6) is secured on the free end of the mirror casing (10, 32) near the mirror foot, and is also secured on a mirror foot casing (4).

14. An exterior mirror in accordance with one of claims 11 to 13, **characterised in that** each mirror glass (80, 90) is secured on the lines of piping (42, 44) via cups (82, 92) housing adjusting motors.

15. An exterior mirror in accordance with one of the preceding claims, **characterised in that** a cut-out portion of the mirror casing (10), provided in the region of the mirror glasses (80, 90), is covered by a moulded part (32), so that the mirror casing (10) and the moulded part (32) form a chamber which is sealed against atmospheric exposure.

## Revendications

1. Rétroviseur extérieur pour un véhicule utilitaire, en particulier autobus, avec un pied de rétroviseur (2) pouvant être fixé sur le véhicule, une articulation (50) avec axe de pivotement sensiblement vertical (15) étant fixée entre le pied de rétroviseur (2) et un bras (40) portant un corps de rétroviseur (10) avec miroir (80, 90), l'articulation (50) présentant une première pièce d'appui (20) formée sur le pied de rétroviseur avec surface d'appui en forme de tronc de cône (28) ainsi qu'une deuxième pièce d'appui (60) avec contre-surface d'appui en forme de tronc de cône (68), caractérisé en ce que la deuxième pièce d'appui (60) est formée sur le bras (40) et en ce que les deux pièces d'appui (20, 60) sont maintenues ensemble par un boulon sollicité par ressort (70) formant l'axe de pivotement (15) et présentent un perçage traversier (22, 62) pour le boulon (70).

2. Rétroviseur extérieur selon la revendication 1, caractérisé en ce que l'articulation est entourée d'un manchon élastique (6).

3. Rétroviseur extérieur selon la revendication 1 ou 2, caractérisé en ce qu'une feuille fendue de préférence axialement (69) est intercalée entre la surface d'appui (28) et la contre-surface d'appui (68).

4. Rétroviseur extérieur selon l'une des revendications précédentes, caractérisé en ce que la surface d'appui (28) reçoit la contre-surface d'appui (68).

5. Rétroviseur extérieur selon l'une des revendications précédentes, caractérisé en ce que la surface d'appui (28) et la contre-surface d'appui (68) s'évasent radialement vers l'extérieur vers le bas.

6. Rétroviseur extérieur selon l'une des revendications précédentes, caractérisé en ce que la première et/ou la deuxième pièce d'appui (20, 60) est/sont formée(s) en forme de pot, le boulon (70) s'étendant à travers la base (24, 64) des pièces d'appui (20, 60).

7. Rétroviseur extérieur selon la revendication 6, caractérisé en ce que la deuxième pièce d'appui (60) présente une surface de soutien (62) s'étendant axialement et reposant sur le boulon (70).

8. Rétroviseur extérieur selon la revendication 6 ou 7, caractérisé en ce qu'un ressort à spirale (74) est contraint entre une extrémité évasée radialement (72) du boulon (70) et la base (64), respectivement l'extrémité libre de la surface de soutien (62).

9. Rétroviseur extérieur selon l'une des revendications précédentes, caractérisé en ce que la deuxième pièce d'appui (60) présente une branche s'étendant radialement (54) qui est pénétré par le boulon (70).

10. Rétroviseur extérieur selon la revendication 9, caractérisé en ce qu'une douille d'amortissement (56) est insérée dans l'ouverture de la branche (54) à travers laquelle s'étend le boulon (70).

11. Rétroviseur extérieur selon l'une des revendications précédentes, caractérisé en ce qu'une construction de tubes (40) constituée de deux lignes de tubes écartées (42, 44) est fixée sur la deuxième pièce d'appui (60), sur laquelle est fixé le corps de rétroviseur (10).

12. Rétroviseur extérieur selon la revendication 11, caractérisé en ce qu'une première section (45) est inclinée sous un premier angle vers l'axe de pivotement (15) et porte un premier miroir (80) et en ce qu'une deuxième section de bras (49) est inclinée sous un deuxième angle vers l'axe de pivotement (15) et porte un deuxième miroir (90).

13. Rétroviseur extérieur selon l'une des revendications précédentes, caractérisé en ce que le manchon (6) est fixé sur l'extrémité libre côté pied de rétroviseur du corps de rétroviseur (10, 32) ainsi que sur un boîtier du pied de rétroviseur (4).

14. Rétroviseur extérieur selon l'une des revendications 11 à 13, caractérisé en ce que chaque miroir (80, 90) est fixé sur les lignes de tubes (42, 44) par l'intermédiaire de boîtiers (82, 92) logeant des servomoteurs.

15. Rétroviseur extérieur selon l'une des revendications précédentes, caractérisé en ce qu'une découpe du corps de rétroviseur (10) prévue dans la zone des miroirs (80, 90) est recouverte d'une pièce usinée (32), de sorte que le corps de rétroviseur (10) avec la pièce usinée (32) forme un espace fermé contre l'influence des intempéries.
